# EUROPÄISCHE PATENTSCHRIFT

(11) **EP 0 787 911 B1**
(45) Veröffentlichungstag und Bekanntmachung des Hinweises auf die Patenterteilung: **17.07.2002**
(21) Anmeldenummer: 97100954.3
(22) Anmeldetag: 22.01.1997
(51) Int. Cl.: F16C 13/00

(54) **Walze**
Roll
Rouleau

(30) Priorität: 01.02.1996 DE 19603651
(43) Veröffentlichungstag der Anmeldung: 06.08.1997
(73) Patentinhaber: Voith Sulzer Papiermaschinen GmbH, 89522 Heidenheim (DE)
(72) Erfinder: Schneid, Josef, 88267, Vogt (DE); Brandiser, Herbert, 88284 Monchenwangen (DE)
(74) Vertreter: Finsterwald, Martin

(56) Entgegenhaltungen:
- EP-A- 0 241 442
- EP-A- 0 447 651
- DE-A- 3 025 799
- DE-A- 4 305 371
- DE-U- 9 105 073
- GB-A- 2 068 505
- GB-A- 2 098 304
- GB-A- 2 143 302
- US-A- 4 691 421

## Beschreibung

Die Erfindung betrifft eine Walze der im Oberbegriff des Anspruchs 1 angegebenen Art.

Eine derartige Walze kann beispielsweise in einem Walzwerk zur Behandlung von Faserstoffbahnen wie insbesondere Papier, Karton oder dergleichen eingesetzt werden. Hierbei wird die Faserstoffbahn durch einen Preßspalt zwischen dem Walzenmantel und einer Gegenfläche, insbesondere die einer Gegenwalze, hindurchgeführt.

Bei bestimmten bekannten Walzen ist der Walzenmantel an seinen beiden Enden drehbar gelagert und zusätzlich nur durch zwischen den beiden äußeren Drehlagern angeordnete Stützelemente am Träger abgestützt. Diese bekannten Walzen weisen den Nachteil auf, daß eine Beeinflussung der Enden des Walzenmantels nur durch diese Stützelemente möglichst ist.

Aus der DE 91 05 073 U ist bereits eine Durchbiegungseinstellwalze bekannt, bei der axial außerhalb der beiden Drehlager zusätzliche radial bewegliche Stützelemente vorgesehen sind.

Bei einer aus der DE 30 25 799 A bekannten Walze der eingangs genannten Art ist das Stützelement der Krafterzeugungseinrichtung an einem Abstützblock gelagert oder abgestützt, der auf einem Maschinengestell, einer Fundamentplatte oder dergleichen ruht und zur Lagerung des Trägers bzw. Jochs dient. Das Getriebe ist radial innerhalb des dem betreffenden Walzenende zugeordneten Lagers angeordnet. Überdies liegt das Stützelement sowohl axial außerhalb des Lagers als auch axial außerhalb des Getriebes bzw. des dieses Getriebe aufnehmenden Gehäuses.

Der Erfindung liegt die Aufgabe zugrunde, eine Walze der eingangs genannten Art zu schaffen, deren Walzenmantel insbesondere auch an den beiden Enden im Hinblick auf eine optimale Anpassung an die jeweiligen Betriebsbedingungen entsprechend beaufschlagbar ist.

Die Aufgabe wird nach der Erfindung durch die im kennzeichen des Anspruchs 1 angegebenen merkmale gelöst.

Aufgrund dieser Ausbildung wird erreicht, daß die Walze auch außerhalb des durch die Lager begrenzten Bereichs so beaufschlagbar ist, daß im Hinblick auf die jeweiligen Betriebsbedingungen ein Optimum erzielt wird. So kann beispielsweise die Kraft, mit der ein jeweiliges äußeres Stützelement gegen den Innenumfang des Walzenmantels gepreßt wird, in der gewünschten Weise eingestellt werden. Dies kann beispielsweise bei einer Durchbiegungsbeeinflussung sowie auch bei der Erzeugung einer Anstellbewegung des Walzenmantels von Vorteil sein. Zudem kann durch eine entsprechende Wahl der Temperatur des im Bereich eines betreffenden äußeren Stützelements zuge führten Schmieröls auch eine im Hinblick auf die jeweiligen Betriebsbedingungen optimale Temperaturbeeinflussung der Randbereiche erfolgen. Im Ergebnis ist somit eine wesentlich größere Randbeeinflussung der Warenbahn möglich.

Der Walzenmantel ist an einem Ende über ein Getriebe antreibbar sein, das in einem axial äußeren, drehbar am Walzenmantel oder einer rohrförmigen Verlängerung des Walzenmantels gelagerten sowie bezüglich des Trägers oder der Walzen-Stuhlung drehfesten Getriebegehäus aufgenommen ist. Dabei ist vorteilhafterweise wenigstens ein äußeres Stützelement im Bereich des Getriebegehäuses vorgesehen. Im Ergebnis ist somit ein optimaler Ausgleich des Getriebegewichts möglich. Zudem besteht die Möglichkeit einer relativ weit außen liegenden Krafteinleitung für eine Biegebeeinflussung des Walzenmantels. Grundsätzlich kann jedoch auch am gegenüberliegenden getriebelosen Ende der Walze wenigstens ein solches Stützelement vorgesehen sein.

In den Unteransprüchen sind weitere vorteilhafte Ausführungsvarianten der erfindungsgemäßen Walze angegeben.

Die Erfindung wird im folgenden anhand von Ausführungsbeispielen unter Bezugnahme auf die Zeichnung näher erläutert; in dieser zeigen:
- Figur 1: eine schematische, teilweise geschnittene Teilansicht einer Ausführungsvariante der mit einer Gegenwalze zusammenwirkenden Walze,
- Figur 2: eine Figur 1 vergleichbare Darstellung eines weiteren Ausführungsbeispiels der Walze und
- Figur 3: eine Figur 1 vergleichbare Darstellung eines weiteren Ausführungsbeispiels der Walze.

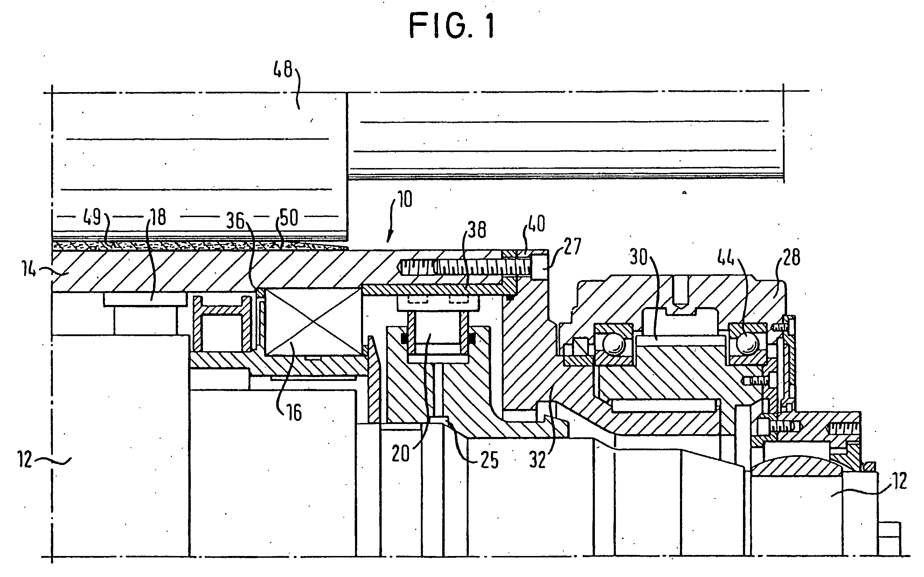

Die in Figur 1 dargestellte Walze 10 umfaßt einen stationären Träger 12 sowie einen den Träger 12 umgebenden Walzenmantel 14. Der Walzenmantel 14 ist durch zwei im Abstand voneinander angeordnete konzentrische Lager 16 (nur eines gezeigt) auf dem,Träger 12 drehbar gelagert. Diese konzentrischen Lager 16 können beliebig ausgebildet sein. So ist es beispielsweise denkbar, Wälzlager, hydrodynamische Lager, hydrostatische Lager oder dergleichen zu verwenden.

Zwischen den beiden konzentrischen Lagern 16 sind vorzugsweise mehrere, in Axialrichtung hintereinanderliegende innere Stützelemente 18 vorgesehen. Hierbei kann es sich um hydrostatische und/oder hydrodynamische Stützelemente handeln, d.h. um solche mit einer hydrostatischen bzw. hydrodynamischen Schmierung. Durch diese inneren, d.h. zwischen den beiden konzentrischen Lagern 16 angeordneten Stützelemente 18 ist der Walzenmantel 14 zusätzlich auf dem stationären Träger 12 abgestützt.

Ferner ist der Walzenmantel 14 über wenigstens ein äußeres, axial außerhalb des durch die Lager 16 begrenzten Bereichs angeordnetes Stützelement 20 auf dem Träger 12 abgestützt. Auch bei diesem Stützelement kann es sich wiederum um ein hydrostatisches und/oder hydrodynamisches Stützelement handeln.

Vorzugsweise ist auf beiden Seiten des durch die konzentrischen Lager 16 begrenzten Bereichs jeweils wenigstens ein äußeres Stützelement 20 vorgesehen.

Wie anhand von Figur 1 zu erkennen ist, ist das dargestellte äußere Stützelement 20 im Bereich des rechten Endes des Walzenmantels 14 radial zwischen dessen Innenumfangsfläche und dem stationären Träger 12 angeordnet. Das kolbenartig gegen die Innenumfangsfläche des Walzenmantels 14 gepreßte äußere Stützelement 20 wird über einen Kanal 25 mit einem Druckfluid versorgt. Die Zufuhr von Schmieröl kann unabhängig vom dem Stützelement 18 erfolgen. Grundsätzlich ist jedoch auch eine Schmierölzufuhr über den betreffenden Druckraum denkbar.

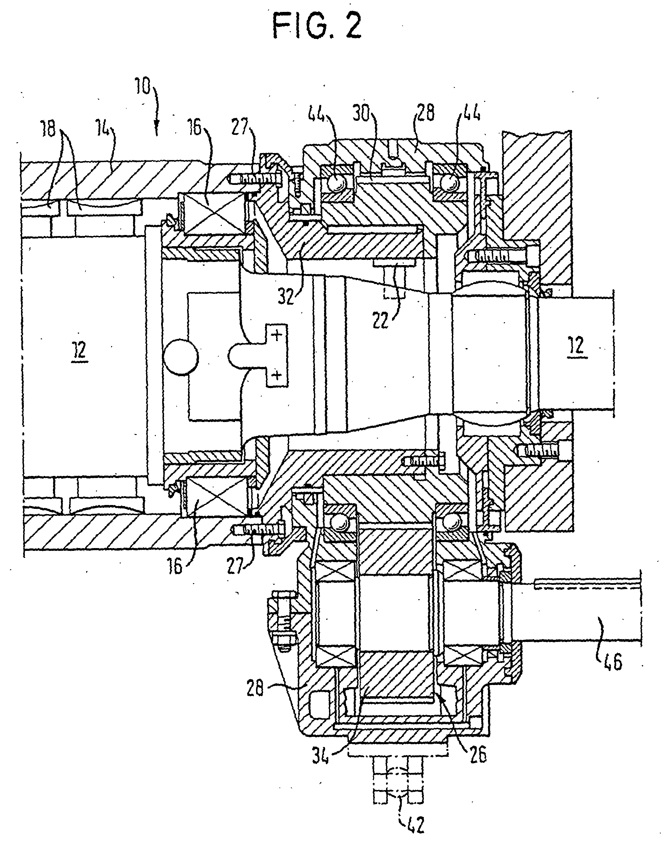

Bei sämtlichen Ausführungsbeispielen wird der Walzenmantel 14 am rechten Ende über ein Getriebe 26 angetrieben. Dieses Getriebe 26 ist in einem axial äußeren, drehbar am Walzenmantel 14 gelagerten Getriebegehäuse 28 aufgenommen, das mittels einer Drehmomentstütze 42 (vgl. Figur 2) abgestützt ist. Dieses Getriebegehäuse 28 ist bezüglich des Trägers 12 somit drehfest.

Das Getriebe 26 umfaßt ein Zahnrad 34, das mit einer fest mit dem Walzenmantel 14 verbundenen Verzahnung 30 kämmt. Bei den dargestellten Ausführungsbeispielen ist diese Verzahnung 30 an einem Anbauteil 32 vorgesehen, der am rechten Ende des Walzenmantels 14 über Schrauben 27 befestigt ist.

Beim in Figur 1 dargestellten Ausführungsbeispiel ist das äußere Stützelement 20 axial zwischen dem Getriebegehäuse 28 und dem betreffenden Lager 16 angeordnet. Das Lager 16 ist durch einen Anschlag 36 und eine vom rechten Ende her in den Walzenmantel 14 eingesetzte Hülse 38 axial gesichert. Die Hülse 38 wird durch die Schrauben 27 zusammen mit dem Anbauteil 32 am Walzenmantel 14 befestigt, wobei die Schrauben 27 sowohl durch einen Flansch 40 des Anbauteils 32 als auch durch einen Flansch der Hülse 38 hindurchtreten.

Wie in Figur 1 zu erkennen ist, wird das äußere Stützelement 20 durch das über den Kanal 25 zugeführte Druckfluid gegen die Innenumfangsfläche der Hülse 38 und über diese gegen die Innenumfangsfläche des Walzenmantels 14 gepreßt.

Bei der in Figur 2 gezeigten Ausführungsvariante erstreckt sich der Walzenmantel 14 im Vergleich zur Ausführung der Figur 1 nur geringfügig über das Lager 16 hinaus nach rechts. Das äußere Stützelement 22 ist nicht mehr axial zwischen dem Getriebegehäuse 28 bzw. dem Anbauteil 32 und dem Lager 16, sondern radial unmittelbar zwischen dem das Getriebegehäuse 28 tragenden Anbauteil 32 und dem stationären Träger 12 angeordnet.

Das Getriebegehäuse 28 ist bei dargestellten Ausführungsvarianten über Lager 44 drehbar am Anbauteil 32 gelagert. Das mit der Verzahnung 30 kämmende Zahnrad 34 wird über eine Welle 46 (vgl. Figur 2) angetrieben, die zum Walzenmantel 14 parallel ist, sich jedoch in der entgegengesetzten Richtung, d.h. im vorliegenden Fall nach rechts erstreckt.

Bei den gezeigten Ausführungsvarianten kann der Walzenmantel 14 zusammen mit dem Getriebe bezüglich des stationären Trägers 12 radial verschiebbar oder auch radial fixiert sein. Bei der radial verschiebbaren Ausführung kann es sinnvoll sein, unter dem Lager 16 Kraftelemente vorzusehen, um auch an dieser Stelle den Walzenmantel zu belasten und/oder zu entlasten.

Der Walzenmantel 14 der Walze 10 wirkt mit einer Gegenwalze 48 zusammen, um dazwischen einen Preßspalt 48 zu bilden, durch den eine zu behandelnde Faserbahn 50 hindurchgeführt wird (vgl. Figur 1).

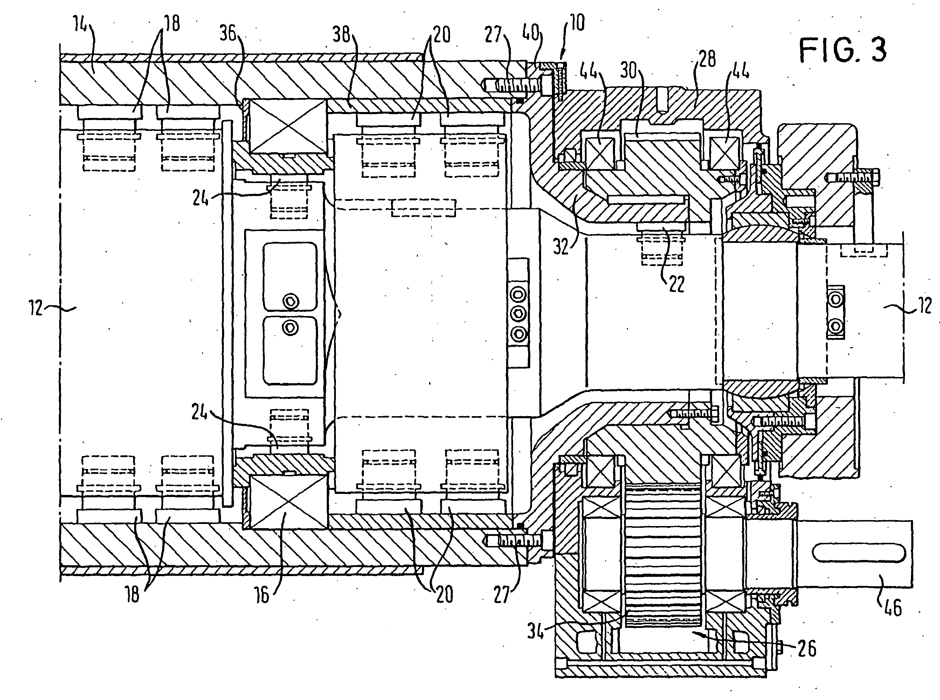

Figur 3 zeigt eine weitere Ausführungsvariante einer Walze 10.

Auch bei dieser Ausführungsvariante umfaßt die Walze 10 wiederum einen stationären Träger 12 sowie einen den Träger 12 umgebenden Walzenmantel 14, der durch zwei im Abstand voneinander angeordnete konzentrische Lager 16 auf dem Träger 12 drehbar gelagert ist. Zwischen den beiden konzentrischen Lagern sind wiederum mehrere, in Axialrichtung hintereinanderliegende innere Stützelemente 18 versehen, durch die der Walzenmantel 14 zusätzlich auf dem stationären Träger 12 abgestützt ist.

Dem dargestellten rechten Lager 16 sind zwei zusätzliche, radial innenliegende Lager-Stützelemente 24 zugeordnet, durch die eine zusätzliche Abpressung vom Träger 12 in und/oder gegen die Preßrichtung der Walze 10 möglich ist.

Ferner ist der Walzenmantel 14 über mehrere äußere, axial außerhalb des durch die konzentrischen Lager 16 begrenzten Bereichs angeordnete Stützelemente 20, 22 auf dem Träger 12 abgestützt. Auch bei diesen Stützelementen kann es sich wiederum um hydrostatische und/oder hydrodynamische Stützelemente handeln.

Beim in Figur 3 dargestellten Ausführungsbeispiel sind zwei obere und zwei untere äußere Stützelemente 20 vorgesehen, die im Bereich des rechten Endes des Walzenmantels 14 radial zwischen dessen Innenumfangsfläche und dem stationären Träger 12 angeordnet sind.

Der Walzenmantel 14 wird am rechten Ende wiederum über ein Getriebe 26 angetrieben, das in einem axial äußeren, drehbar am Walzenmantel 14 gelagerten Getriebegehäuse 28 aufgenommen ist. Dieses Getriebegehäuse 28 ist wie zuvor mittels einer Drehmomentstütze abgestützt und damit bezüglich des Trägers 12 drehfest. Das Zahnrad 34 des Getriebes 26 kämmt wiederum mit einer fest mit dem Walzenmantel 14 verbundenen Verzahnung 30, die an einem am rechten Ende des Walzenmantels 14 über Schrauben 27 befestigten Anbauteil 32 vorgesehen ist. Im vorliegenden Fall ist die Hülse 38 einstückig mit dem Anbauteil 32 ausgebildet.

Die im Bereich des rechten Endes des Walzenmantels 14 vorgesehenen äußeren Stützelemente 20 sind axial zwischen dem Getriebegehäuse 28 und dem rechten Lager 16 angeordnet, wobei die oberen und die unteren Stützelemente 20 jeweils axial hintereinander liegen. Bei einer Beaufschlagung mit Druckfluid werden diese äußeren Stützelemente 20 gegen die Innenumfangsfläche der Hülse 38 und über diese gegen die Innenumfangsfläche des Walzenmantels 14 gepreßt.

Zusätzlich zu den äußeren Stützelementen 20 ist ein weiteres äußeres Stützelement 22 vorgesehen. Dieses weitere äußere Stützelement 22 ist nicht mehr axial zwischen dem Getriebegehäuse 28 bzw. dem Anbauteil 32 und dem rechten Lager, sondern radial unmittelbar zwischen dem das Getriebegehäuse 28 tragenden Anbauteil 32 und dem stationären Träger 12 angeordnet.

Grundsätzlich können solche äußeren Stützelemente auch am gegenüberliegenden, getriebefreien Walzenende vorgesehen sein.

Das Getriebegehäuse 28 ist wiederum über Lager 44 drehbar am Anbauteil 32 gelagert. Das mit der Verzahnung 30 kämmende Zahnrad 34 wird über eine Welle 46 angetrieben, die zum Walzenmantel 14 parallel ist, sich jedoch in der entgegengesetzten Richtung, d.h. im vorliegenden Fall nach rechts erstreckt.

Der Walzenmantel 14 kann zusammen mit dem Getriebe 26 radial verschiebbar oder auch radial fixiert sein. Die radial innerhalb des Lagers 16 vorgesehenen Lager-Stützelemente 24 sind insbesondere bei der radial verschiebbaren Ausführungsform zweckmäßig, so daß der Walzenmantel auch im Bereich des Lagers 16 belastet oder entlastet werden kann.

### Bezugszeichenliste

- 10: Walze
- 12: Träger
- 14: Walzenmantel
- 16: Lager
- 18: innere Stützelemente
- 20: äußeres Stützelement
- 22: äußeres Stützelement
- 24: Lager-Stützelement
- 25: Kanal
- 26: Getriebe
- 27: Schrauben
- 28: Getriebegehäuse
- 30: Verzahnung
- 32: Anbauteil
- 34: Zahnrad
- 36: Anschlag
- 38: Hülse
- 40: Flansch
- 42: Drehmomentstütze
- 44: Lager
- 46: Welle
- 48: Preßspalt
- 50: Faserbahn

## Patentansprüche

1. Walze für ein Walzwerk mit einem Träger (12), einem den Träger (12) umgebenden Walzenmantel (14), der durch zwei im Abstand voneinander angeordnete konzentrische Lager (16) auf diesem drehbar gelagert ist und an einem Ende über ein Getriebe (26) antreibbar ist, das in einem drehbar am Walzenmantel (14) oder einer rohrförmigen Verlängerung des Walzenmantels (14) gelagerten, bezüglich des Trägers (12) oder der Walzen-Stuhlung drehfesten Geriebegehäuse (28) aufgenommen ist, insbesondere zwischen den beiden konzentrischen Lagern (16) vorgesehenen inneren hydrostatischen und/oder hydrodynamischen Stützelementen (18), über die der Walzenmantel (14) zusätzlich auf dem Träger (12) abgestützt ist, und wenigstens einer seitlich des durch die Lager (16) begrenzten Bereichs vorgesehenen Einrichtung zur Krafterzeugung, die zumindest ein äußeres, axial außerhalb des durch die Lager (16) begrenzten Bereichs angeordnetes hydrostatisches und/oder hydrodynamisches Stützelement (20, 22) umfaßt, um den Walzenmantel (14) zu belasten und/oder zu entlasten,
**dadurch gekennzeichnet,**
**daß** die zur Krafterzeugung dienende Einrichtung wenigstens ein äußeres Stützelement (20, 22) umfaßt, das am Träger (12) abgestützt und axial zwischen dem axial außerhalb des Walzenmantels (14) liegenden Getriebegehäuse (28) und dem betreffenden Lager (16) oder radial zwischen dem Getriebegehäuse (28) und dem Träger (12) angeordnet ist.

2. Walze nach Anspruch 1
**dadurch gekennzeichnet,**
**daß** das Getriebe (26) wenigstens ein Zahnrad (34) aufweist, das mit einer fest mit dem Walzenmantel (14) verbundenen Verzahnung (30) kämmt.

3. Walze nach Anspruch 2,
**dadurch gekennzeichnet,**
**daß** die Verzahnung (30) an einem Anbauteil (32) vorgesehen ist, der an einem Ende des Walzenmantels (14) befestigt ist, und daß das Getriebegehäuse (28) an dem Anbauteil (32) drehbar gelagert ist.

4. Walze nach Anspruch 3,
**dadurch gekennzeichnet,**
**daß** wenigstens ein äußeres Stützelement (20) axial zwischen dem Anbauteil (32) und dem betreffenden Lager (16) sowie radial zwischen dem Walzenmantel (14) und dem Träger (12) angeordnet ist.

5. Walze nach Anspruch 3,
durch **gekennzeichnet**,
daß wenigstens ein äußeres Stützelement (22) radial zwischen dem das Getriebegehäuse (28) tragenden Anbauteil (32) und dem Träger (12) angeordnet ist.

6. Walze nach einem der vorhergehenden Ansprüche,
**dadurch gekennzeichnet,**
**daß** der Walzenmantel (14) zusammen mit den konzentrischen Lagern (16) bezüglich des Trägers (12) radial verschiebbar ist.

7. Walze nach einem der Ansprüche 1 bis 5,
**dadurch gekennzeichnet, daß** der Walzenmantel (14) bezüglich des Trägers (12) mittels der konzentrischen Lager (16) radial fixiert ist.

8. Walze nach einem der vorhergehenden Ansprüche,
**dadurch gekennzeichnet,**
**daß** wenigstens ein konzentrisches Lager (16) ein Wälzlager oder eine Lagereinheit ist, die durch mindestens drei zumindest im wesentlichen gleichmäßig über den Umfang verteilte hydrostatische/hydrodynamische Lagerelemente gebildet ist.

9. Walze nach einem der vorhergehenden Ansprüche,
**dadurch gekennzeichnet,**
**daß** wenigstens ein konzentrisches Lager (16) zur zusätzlichen, in und/oder gegen die Preßrichtung der Walze (10) wirkenden Abpressung vom Träger (12) wenigstens ein Lager-Stützelement (24) umfaßt.

10. Walze nach einem der vorhergehenden Ansprüche,
**dadurch gekennzeichnet,**
**daß** außer in Preßrichtung und/oder entgegen der Preßrichtung wirkenden äußeren Stützelementen (20, 22) vorzugsweise im Bereich des Getriebes (26) und/oder an einer entsprechenden Stelle am entgegengesetzten Walzenende wenigstens ein quer zur Preßrichtung auf den Anbauteil (32) wirkendes Stützelement vorgesehen ist.

11. Walze nach einem der vorhergehenden Ansprüche,
**dadurch gekennzeichnet,**
**daß** die konzentrischen Lager (16) ohne dazwischenliegendes Stützelement einander benachbart im Bereich der Walzenmitte angeordnet oder dort zu einer einzigen Lagereinheit zusammengefaßt sind.

## Claims

1. Roll for a rolling mechanism having a carrier (12), having a roll jacket (14) surrounding the carrier (12), the roll jacket being rotatably journalled on the latter by two concentric bearings (16) arranged at a distance from one another and drivable at one end via a transmission (26) which is mounted in a transmission housing (28) which is rotatably fixed relative to the carrier (12) or to the roll frame and rotatably supported at the roll jacket (14) or at a tubular extension of the roll jacket (14), having inner hydrostatic and/or hydrodynamic support elements (18) in particular provided between the two concentric bearings (16), the roll jacket (14) being additionally supported on the carrier (12) via the support elements and at least one device for force generation provided to the side of the zone bounded by the bearings (16) which includes at least one outer hydrostatic and/or hydrodynamic support element (20, 22) arranged axially outside the zone bounded by the bearings (16) in order to load and/or to relieve the roll jacket (14), **characterized in that** the device serving for force generation includes at least one outer support element (20, 22) which is supported at the carrier (12) and arranged axially between the transmission housing (28) disposed axially outside the roll jacket (14) and the relevant bearing (16) or radially between the transmission housing (28) and the carrier (12).

2. Roll in accordance with claim 1, **characterized in that** the transmission (26) has at least one gear wheel (34) which meshes with a toothed arrangement (30) fixedly connected to the roll jacket (14).

3. Roll in accordance with claim 2, **characterized in that** the toothed arrangement (30) is provided on a built-on part (32) which is secured to one end of the roll jacket (14); and **in that** the transmission housing (28) is rotationally journalled on the built-on part (32).

4. Roll in accordance with claim 3, **characterized in that** at least one outer support element (20) is axially arranged between the built-on part (32) and the relevant bearing (16) and is also radially arranged between the roll jacket (14) and the carrier (12).

5. Roll in accordance with claim 3, **characterized in that** at least one outer support element (22) is radially arranged between the built-on part (32) carrying the transmission housing (28) and the carrier (12).

6. Roll in accordance with any one of the preceding claims, **characterized in that**, the roll jacket (14) is radially displaceable relative to the carrier (12) together with the coaxial bearings (16).

7. Roll in accordance with any one of claims 1 to 5, **characterized in that** the roll jacket (14) is radially fixed relative to the carrier (12) by means of the coaxial bearings (16).

8. Roll in accordance with any one of the preceding claims, **characterized in that** at least one coaxial bearing (16) is a rolling bearing or a bearing unit which is formed by at least three hydrostatic/hydrodynamic bearing elements at least substantially uniformly distributed over the periphery.

9. Roll in accordance with any one of the preceding claims, **characterized in that** at least one coaxial bearing (16) includes at least one bearing support element (24) for the additional pressing action in the direction away from the carrier in and/or opposite to the pressing direction of the roll (10).

10. Roll in accordance with any one of the preceding claims, **characterized in that** apart from outer support elements (20, 22) which act in the pressing direction and/or opposite to the pressing the direction at least one support element is provided which acts transverse to the pressing direction on the built-on part (32), preferably in the region of the transmission (28) and/or at a corresponding point at the opposite roll end.

11. Roll in accordance with any one of the preceding claims, **characterized in that** the coaxial bearings (16) are arranged adjacent to one another without an intermediate support element in the region of the roll center or are combined there into a single bearing unit.

## Revendications

1. Cylindre pour un laminoir, comportant un support (12), un bandage de cylindre (14) entourant le support (12), lequel est monté rotatif sur celui-ci par deux paliers (16) agencés de manière concentrique l'un par rapport à l'autre et qui peut être entraîné à une extrémité par une transmission (26) qui est reçue dans un boîtier de transmission (28) monté rotatif sur le bandage de cylindre (14) ou sur un prolongement tubulaire du bandage de cylindre (14) et solidaire en rotation par rapport au support (12) ou du châssis de cylindre, des éléments de soutien (18) intérieurs hydrostatiques et/ou hydrodynamiques prévus en particulier entre les deux paliers (16) concentriques, via lesquels le bandage de cylindre (14) est additionnellement soutenu sur le support (12), et au moins un dispositif prévu latéralement à la région délimitée par les paliers (16) et servant à engendrer une force, lequel comprend au moins un élément de soutien extérieur (20, 22) hydrostatique et/ou hydrodynamique agencé axialement en dehors de la région délimitée par les paliers (16) pour charger et/ou décharger le bandage de cylindre (14),
**caractérisé en ce que**
le dispositif servant à engendrer une force comprend au moins un élément de soutien extérieur (20, 22) qui prend appui sur le support (12) et qui est agencé axialement entre le boîtier de transmission (28) situé axialement à l'extérieur du bandage de cylindre (14) et le palier (16) correspondant ou radialement entre le boîtier de transmission (28) et le support (12).

2. Cylindre selon la revendication 1, **caractérisé en ce que** la transmission (26) présente au moins une roue dentée (34) qui engrène une denture (30) reliée solidairement au bandage de cylindre (14).

3. Cylindre selon la revendication 2, **caractérisé en ce que** la denture (30) est prévue sur une pièce rapportée (32) qui est fixée à une extrémité du bandage de cylindre (14), et **en ce que** le boîtier de transmission (28) est monté rotatif sur la pièce rapportée (32).

4. Cylindre selon la revendication 3, **caractérisé en ce qu'**au moins un élément de soutien extérieur (20) est agencé axialement entre la pièce rapportée (32) et le palier correspondant (16) ainsi que radialement entre le bandage de cylindre (14) et le support (12).

5. Cylindre selon la revendication 3, **caractérisé en ce qu'**au moins un élément de soutien extérieur (22) est agencé radialement entre la pièce rapportée (32) portant le boîtier de transmission (28) et le support (12).

6. Cylindre selon l'une quelconque des revendications précédentes, **caractérisé en ce que** le bandage de cylindre (14) peut être déplacé radialement conjointement avec les paliers (16) concentriques par rapport au support (12).

7. Cylindre selon l'une quelconque des revendications 1 à 5, **caractérisé en ce que** le bandage de cylindre (14) est fixé radialement par rapport au support (12) au moyen des paliers (16) concentriques.

8. Cylindre selon l'une quelconque des revendications précédentes, **caractérisé en ce qu'**au moins un palier (16) concentrique est un palier à roulements ou une unité de palier qui est formée par au moins trois éléments de palier hydrostatiques/hydrodynamiques répartis au moins sensiblement régulièrement sur la périphérie.

9. Cylindre selon l'une quelconque des revendications précédentes, **caractérisé en ce qu'**au moins un palier (16) concentrique comprend au moins un élément de soutien de palier (24) pour effectuer additionnellement un retrait par pression hors du support (12), agissant dans et/ou contre la direction de pressage du cylindre (10).

10. Cylindre selon l'une quelconque des revendications précédentes, **caractérisé en ce qu'**en dehors des éléments de soutien extérieurs (20, 22) agissant en direction de pressage et/ou contre la direction de pressage, de préférence dans la région de la transmission (26) et/ou à un endroit correspondant sur l'extrémité opposée du cylindre, il est prévu au moins un élément de soutien agissant transversalement à la direction de pressage sur la pièce rapportée (32).

11. Cylindre selon l'une quelconque des revendications précédentes, **caractérisé en ce que** les paliers (16) concentriques sont agencés à proximité l'un de l'autre dans la région du milieu du cylindre sans élément de soutien situé entre eux ou sont réunis à cet endroit pour former une unité de palier unique.
